# EUROPÄISCHE PATENTSCHRIFT

(11) **EP 1 476 534 B1**
(45) Veröffentlichungstag und Bekanntmachung des Hinweises auf die Patenterteilung: **29.06.2005**
(21) Anmeldenummer: 04706632.9
(22) Anmeldetag: 30.01.2004
(51) Int. Cl.: C12G 1/06

(54) **"DOUBLESSE"-VERFAHREN ZUR HERSTELLUNG VON SCHAUMWEIN**
"DOUBLESSE" METHOD FOR PRODUCING SPARKLING WINE
PROCEDE DOUBLESSE POUR PRODUIRE UN VIN MOUSSEUX

(30) Priorität: 31.01.2003 DE 10303820
(43) Veröffentlichungstag der Anmeldung: 17.11.2004
(73) Patentinhaber: Sektkellerei Schloss Wachenheim AG, 67157 Wachenheim (DE)
(72) Erfinder: CARSTENS, Bernt, 67434 Neustadt an der Weinstr. (DE)
(74) Vertreter: Steinecke, Peter, Dr.
(86) Internationale Anmeldenummer: PCT/EP2004/000889
(87) Internationale Veröffentlichungsnummer: WO 2004/067694

(56) Entgegenhaltungen:
- EP-A- 0 325 193
- DD-A- 135 828
- DE-C- 546 740
- DE-C- 4 119 352
- DATABASE WPI Section Ch, Week 198410 Derwent Publications Ltd., London, GB; Class D16, AN 1984-060712 XP002279637 & SU 1 013 464 A (FOOD IND CORRESPOND), 23. April 1983 (1983-04-23)
- DATABASE WPI Section Ch, Week 199325 Derwent Publications Ltd., London, GB; Class D16, AN 1993-204466 XP002279638 & SU 1 745 124 A (AVANESYANTS R V), 30. Juni 1992 (1992-06-30)

## Beschreibung

Die Erfindung betrifft die Herstellung von Schaumwein durch alkoholische Gärung eines Gemisches aus Wein und einer zuckerhaltigen Komponente unter Verwendung von Hefe und durch das erfindungsgemäße Verfahren hergestellte Schaumweine. Das erfindungsgemäße Verfahren zeichnet sich insbesondere dadurch aus, dass ein wesentlicher Teil der zu vergärenden zuckerhaltigen Komponente zu einem Zeitpunkt während der vorzugsweise kontinuierlich ablaufenden Gärung zugeführt wird.

DE 546740 offenbart ein Verfahren zur Herstellung von Schaumweinen.

Bei der herkömmlichen Schaumweinherstellung durch Vergären eines Gemisches aus Wein und Zucker in Gegenwart von Hefe stammen die Geschmacks- und Geruchskomponenten ausschließlich aus dem Wein. Man kennt aber bereits die Möglichkeit, Traubenmost oder Traubenmostkonzentrat anstelle von Rohr- oder Rübenzucker als vergärbare Zuckerkomponente zu verwenden. Dadurch können dem Schaumwein Aromabestandteile des Traubenmostes zugeführt werden. Insbesondere hat man durch Verwendung von aromaintensivem Traubenmost die Möglichkeit, besonders geschmacks- und geruchsbestimmende Komponenten zuzuführen.
Naturgemäß sind aber selbst beim letztgenannten Verfahren unter Verwendung von Traubenmost als vergärbarer zuckerhaltiger Komponente die Möglichkeiten der Geschmacks- und Geruchsbeeinflussung des Schaumweins begrenzt.

Aufgabe der Erfindung ist es daher, ein Verfahren zur Herstellung von Schaumwein bereitzustellen, mit dem eine noch weiter gehende Beeinflussung der Aromakomponenten ermöglicht wird.

Erfindungsgemäß wurde festgestellt, dass sich überraschende Möglichkeiten der Geschmacks- und Geruchsbeeinflussung von Schaumwein ergeben, wenn man die Vergärung des Gemisches aus Wein und der zuckerhaltigen Komponente in mindestens zwei Stufen durchführt, wobei der Gärungsprozess im Wesentlichen kontinuierlich abläuft.

Gegenstand der Erfindung ist somit ein Verfahren zur Herstellung von Schaumwein, bei dem Wein unter Verwendung von Hefe und einer zuckerhaltigen Komponente zu Schaumwein vergoren wird (Schaumweingärung), wobei
(a) nach Zugabe der Hefe mit einer Teilmenge der zuckerhaltigen Komponente
(b) zumindest ein Teil der zu vergärenden zuckerhaltigen Komponente zu einem späteren Zeitpunkt während der Gärung zugeführt wird.
Das erfindungsgemäße Verfahren wird nachfolgend auch als "Doublesse"-Verfahren bezeichnet.
Bei der mindestens zweistufigen Durchführung der Schaumweingärung können in den einzelnen Stufen unterschiedliche Zusatzstoffe (zuckerhaltige Komponenten und Hefen) und unterschiedliche Verfahrensbedingungen (Gärtemperatur, Gärgeschwindigkeit) angewendet werden, was die Möglichkeiten zur Beeinflussung der geruchs- und geschmacksbestimmenden Komponenten stark erweitert. Insbesondere bewirkt die Durchführung der Schaumweingärung in Teilstufen insgesamt eine Verlangsamung der Gärung und damit eine bessere Bindung von Kohlensäure und flüchtigen Aromabestandteilen. Dementsprechend ist die bei der Durchführung des erfindungsgemäßen Verfahrens eingesetzte Gesamtmenge an vergärbaren Zuckern gegenüber herkömmlichen Verfahren im Wesentlichen gleich. Ohne an eine bestimmte Theorie gebunden sein zu wollen, wird erfindungsgemäß davon ausgegangen, dass es beim vorliegenden Verfahren im Wesentlichen darauf ankommt, die fortlaufende Schaumweingärung durch Speisung mit einem Anteil der ansonsten bei herkömmlichen Sektherstellungsverfahren bereits bei Einleitung der Gärung vollständig zugesetzten Dosage zu verlangsamen. Wie in den Beispielen beschrieben, unterscheiden sich die nach dem erfindungsgemäßen Verfahren hergestellten Schaumweine, hier Sekt, von den nach herkömmlichen Verfahren erhaltenen insbesondere durch den Gehalt der Aromastoffe. Es wird daher angenommen, dass die erfindungsgemäße "Stufengärung" die in der ersten Stufe entstandenen Aromastoffe, insbesondere Terpene, in der zweiten Stufe anders verändert, als wenn die gleichen Süßungs-Ingredienzien in einer einzigen Durchgärung ihre Terpene bilden.

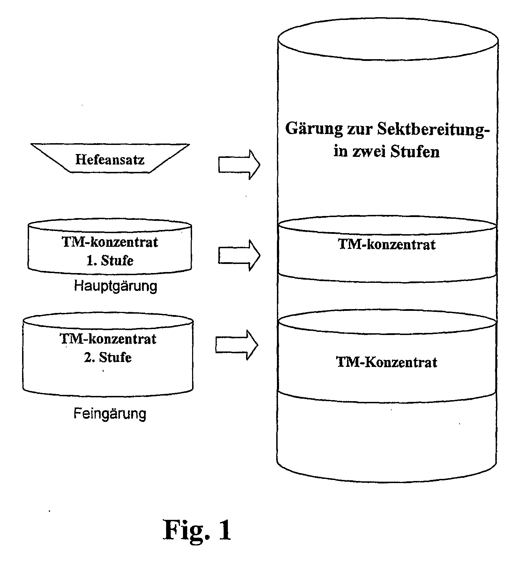

Zum Verständnis der Teilstufen sei ausgeführt, das die Schaumweingärung zu Sekt relativ kontinuierlich und ohne Unterbrechung verlaufen sollte. Mit der einmalig zugesetzten speziellen Sekthefe wird dem Wein eine Teilmenge der Zuckerkomponente, vorzugsweise Traubenmost (TM) und/oder Traubenmostkonzentrat (TMK) zugeführt, die Gärung wird eingeleitet; siehe zur Erläuterung auch Fig. 1. Mit Zugabe der weiteren Teilmenge von TM/TMK, wird die Gärung fortgesetzt und zu Ende geführt. Die insgesamt eingebrachte Menge an TM/TMK entspricht vorzugsweise der jeweils gesetzlich vorgeschriebenen zulässigen Alkoholerhöhung für die Schaumweinbereitung.
Um dies zu erreichen werden in der 1. Teilstufe der Gärung vorzugsweise ca. 10 bis 12 g/l potenzielle Zucker und in der zweiten Teilstufe ebenso vorzugsweise etwa 12 g/l gemessene Zuckermenge (Glucose/Fruktose), vorzugsweise mittels TM/TMK zugesetzt. Die Stufendosage in der Sektgärung erzeugt eine an die Gärungsphysiologie angepasste Entwicklung der Sekundäraromen und Pflanzenstoffen (u.a. Terpene).

Demnach zeichnet sich das erfindungsgemäße Doublesse-Verfahren gegenüber einer herkömmlichen Sektherstellung mit einer Fülldosage XY in einer durchgehenden, üblichen Gärung vorzugsweise dadurch aus, dass zunächst der Dosage-Anteil X vergärt wird (und beispielsweise die Hälfte des benötigten CO₂-Druckes erzeugt wird) und erst anschließend der Dosage-Anteil Y, und somit der durch Doublesse-Verfahren erhaltene Schaumwein seinen CO₂-Gehalt grundsätzlich der gleichen Dosage verdankt, wobei aber gegenüber dem herkömmlichen Verfahren, wahrscheinlich durch "Übergärung" von X durch Y, neue Aroma-Varianten entstehen. Bei dem ersten Teil des Gäransatzes wird für gewöhnlich die Zuckerkomponente, d.h. Traubenmost bzw. Traubenmostkonzentrat bis zur jeweils gesetzlich zulässigen maximalen Alkoholerhöhung zugesetzt. Noch während der Gärung wird in der zweiten Stufe erneut vorzugsweise Traubenmost zugesetzt, ohne dass es zur weiteren Erhöhung des potentiellen Alkoholgehalts kommt.
In den erfindungsgemäß bevorzugten Ausführungsformen des Doublesse-Verfahrens ist die Gärung beim Zusatz der Zuckerkomponente, d.h. Traubenmost in der zweiten Teilstufe noch voll im Gange. In diesen Ausführungsformen entspricht das Doublesse-Verfahren auch der gesetzlichen Definition der Schaumweinzubereitung, siehe beispielsweise Anhang I Nr. 15 der Verordnung (EG) 1493/99, in der Schaumwein als ein u.a. durch erste oder zweite alkoholische Gärung von Trauben, Traubenmost oder Wein gewonnenes Erzeugnis definiert wird. Dabei ist entscheidend, dass nur eine Schaumweingärung des Produktes abläuft.

Als Hefen kommen beispielweise die in herkömmlichen Verfahren verwendeten Sekthefen in Betracht. Geeignete Stämme können beispielsweise von der Deutschen Sammlung für Mikroorganismen und Zellkulturen (DSMZ) in Braunschweig bezogen werden; siehe www.dsmz.de/dsmzhome.htm.

Gewöhnlich umfasst die zuckerhaltige Komponente Traubenbestandteile und ggf. andere zuckerhaltige Bestandteile. Erfindungsgemäß können als Traubenbestandteile beispielsweise Traubenmaische, Traubenmost, Traubenkonzentrat, mit Wasser rückverdünntes Traubenkonzentrat, Traubensaft oder eine Mischung davon verwendet werden. Traubenbestandteile bestehen nicht nur aus dem natürlichen Zucker der Traube, sondern beinhalten auch Aromastoffe. Neben der relativ hohen Menge an Zucker (ca. 180 bis 220 g/l Most), sind eine Vielzahl von pflanzlichen Verbindungen, Fruchtsäuren, sekundären Pflanzenstoffen (vorrangig phenolische Verbindungen), Duft- und Aromastoffen im Traubenmost enthalten. Daher ist die Verwendung von Traubenmost und Traubenmostkonzentrat statt beispielsweise Rübenzucker, insbesondere in der zweiten Teilstufen der Gärung, besonders bevorzugt, da dadurch dem Schaumwein zusätzliche Aromastoffe zugeführt werden können. Allgemein werden diese Bestandteile durch den zuckerfreien Extrakt ermittelt.
Mit Wasser rückverdünntes Traubenkonzentrat wird vorteilhafterweise durch Mischen von Traubenkonzentrat mit Wasser im Verhältnis von etwa 1:5 bis 1:10, bevorzugt im Verhältnis von etwa 1:8, erhalten. Die Traubenbestandteile können sowohl aus weißem als auch aus rotem Traubenmaterial gewonnen werden; ebenso ist es selbstverständlich möglich, Traubenbestandteile zu verwenden, die aus einer Mischung von weißem und rotem Traubenmaterial hergestellt wurden. Die Art der verwendeten Traubenbestandteile, die verwendeten Hefen und die Führung des Gärungsverfahrens bestimmen im Wesentlichen die visuellen, olfaktorischen und gustatorischen Eigenschaften des Gärungsprodukts. Insoweit besteht für den Fachmann eine Mehrzahl an Kombinationsmöglichkeiten, wobei durch routinemäßige Versuche die angemessene Kombination und/oder Verfahrensführung ermittelt werden kann, die die jeweils gewünschten Eigenschaften des Gärungsgetränks ergibt, wie auch in den Beispielen beschrieben. Im Falle der Traubenbestandteile können auch gentechnisch veränderte Trauben als Ausgangsmaterial dienen; siehe beispielsweise die WO97/49277, die die Herstellung von pathogen-resistenten transgenen Weinpflanzen beschreibt.
Besonders bevorzugt als zuckerhaltige Komponente sind Traubenmost (TM) und Traubenmostkonzentrat (TMK).

Es hat sich als vorteilhaft erwiesen, wenn für das erfindungsgemäße Verfahren ein Verhältnis der in (a) und (b) eingesetzten zuckerhaltigen Komponente, d.h. wie oben beschrieben Dosage X und Y von 40-60% bis 60-40% bezogen auf die Gesamtmenge an eingesetzten vergärbaren Zuckern verwendet wird, wie Glukose bzw. Fruktose.

Als zuckerhaltige Komponenten, die in den Teilstufen der Schaumweingärung zugesetzt werden, kommen vergärbare Zucker, wie Rohr- und Rübenzucker, und Traubenmost oder Traubenmostkonzentrat in Frage, wobei vorzugsweise während mindestens einer Teilstufe Traubenmost oder Traubenmostkonzentrat zugesetzt wird. Daher wird in einer besonders bevorzugten Ausführungsform des erfindungsgemäßen Verfahrens als zuckerhaltige Komponente in (a) und/oder (b) Traubenmost und/oder Traubenmostkonzentrat verwendet.

Besonders bevorzugt in den erfindungsgemäßen Verfahren ist die Verwendung von Traubenkonzentrat, siehe auch die Beispiele. Bei dem verwendeten Traubenkonzentrat handelt es sich vorzugsweise um ein aufkonzentriertes, rektifiziertes Traubenmostkonzentrat (RTK). Das Konzentrat ist also nicht aus sämtlichen Bestandteilen der Trauben hergestellt. Das RTK hat vorzugsweise folgende Parameter:

| | | |
|---|---|---|
| Alkohol enzymatisch | 0,009 | vol.% |
| Brix | 63,0 | Grad |
| als Saccharose berechnet | 808,92 | g/l |

Brix - Gesamtextrakt Balling = Gew.-%. Die Traubenmoste, die zu RTK verarbeitet werden, haben in der Regel Standard-Parameter.

| | | |
|---|---|---|
| Wasser | 700-850 | g/l |
| Zucker, gesamt | 120-400 | g/l |
| Säuren | 5-15 | g/l |
| Mineralstoffe | 2 - 5 | g/l |
| Stickstoffverbindungen | 0,1- 3 | g/l |
| Aromastoffe | 1-2 | g/l |

Farb- und Gerbstoffe, Fette, Wachse und Enzyme können im Spurenbereich vorliegen. Wie vorstehend erwähnt, kann die Vergärung sowohl mit weißem als auch mit rotem Traubenmaterial, beispielsweise in Form von Süßreserve, Most oder RTK erfolgen. Welche Variante letztendlich vorzugsweise genommen wird, kann auch durch gemäß den in den Beispielen beschriebenen Vorversuchen ermittelt werden. In dieser Versuchsreihe können sämtliche Produktparameter wie z.B. Farbe, organoleptische Faktoren, Schaumbildung und die im Fertiggetränk enthaltenen ernährungsphysiologisch positiv wirkenden Inhaltsstoffe, Alkoholgehalt, Säure, Extrakt usw. analysiert und in einer Produkt-Standard-Matrix formuliert werden.

Besonders bevorzugt werden in den erfmdungsgemäßen Verfahren Traubenbestandteile verwendet, die entweder im Wesentlichen von weißen oder roten Weintrauben stammen, wobei aber auch Mischungen, die eine typische Roséfarbe ergeben, in bestimmten Fällen ebenfalls bevorzugt sind.
In einer besonders bevorzugten Ausführungsform sind die verwendeten Traubenbestandteile rebsortenrein, d.h. als Traubenquelle für ein bestimmtes Gärungsgetränk wird lediglich im Wesentlichen eine Rebsorte verwendet. Rebsorten für weiße Trauben sind beispielweise Bacchus, Bronner, Chardonnay, Johanniter, Kerner, Merzling, Müller-Thurgau, Perle, Prinzipal, Rieslaner, Riesling, Roter Traminer, Ruländer, Scheurebe, Sauvignon blanc, Silvaner, Weisser Burgunder. Rebsorten für rote Trauben sind beispielweise Acolon, Blauburger, Blauer Frühburgunder, Blaufränkisch, Blauer Portugieser, Blauer Spätburgunder, Blauer Zweigelt, Cabernet Dorsa, Cabernet Mitos, Cabernet Sauvignon, Domina, Dornfelder, Merlot, Regent, Rondo, Schwarzriesling und St. Laurent.
Besonders bevorzugt stammen die Traubenbestandteile im Wesentlichen von der Rebsorte Riesling oder Spätburgunder.

Die Vergärung erfolgt vorzugsweise als Maische (Mischsubstrat aus Traubenmostkonzentraten oder Süßreserven). Ein Zusatz von vitaler Hefe kann aber auch erst kurz vor dem Abfüllen des Getränks erfolgen, um eine Flaschengärung einzuleiten.

In einer weiteren Ausführungsform wird Wein nach Zusatz von zuckerhaltigen Komponenten und Hefe zu Schaumwein vergoren (Schaumweingärung). Auch hierbei wird, wie vorstehend erläutert, das erfindungsgemäße Verfahren so durchgeführt, dass die Schaumweingärung in mindestens zwei Teilstufen durchgeführt wird. Vorzugsweise werden in mindestens einer Teilstufe Traubenmost oder Traubenmostkonzentrat als zuckerhaltige Komponente verwendet.

Es besteht ferner die Möglichkeit, bei den einzelnen Gärstufen Traubenmoste oder Traubenmostkonzentrate gleicher oder unterschiedlicher Rebsorten zu verwenden. Der Vorteil bei der Verwendung von beispielsweise Traubenmostkonzentraten zweier oder mehrerer verschiedener Traubensorten ist, dass dem Schaumwein besondere Aromanoten zugeführt werden können. Dementsprechend können auch ein Most oder Mostkonzentrat einer vom Wein abweichenden Traubensorte verwendet werden.

Eine weitere Möglichkeit zur Bereitstellung von geschmacks- und geruchsintensiven Komponenten im Schaumwein besteht darin, dass die Weingärung gemäß Stufe a) unter Kondensatrückführung durchgeführt wird. Dabei werden die beim Gärprozess entstehenden Gärungsprodukte durch eine am Kopf des Gärbehälters angebrachte Kondensationseinrichtung von den Gaspartikeln (insbesondere CO₂) abgetrennt. Die Gärungsprodukte werden mit Ausnahme der Kohlensäure nach der Kondensation dem entstehenden Wein wieder zugeführt. Dadurch gelingt es, die bei der alkoholischen Gärung gebildeten Geschmacks- und Aromastoffe weitgehend im Endprodukt zu erhalten.
In dieser Ausführungsform des erfindungsgemäßen Verfahrens wird daher die Stufe der Weingärung vorzugsweise unter Kondensatrückführung durchgeführt.

Während der alkoholischen Gärung entstehen als Stoffwechselprodukte der Hefe eine Vielzahl unterschiedlicher chemischer Verbindungen wie höhere Alkohole, Ester, Aldehyde, Diacetyl, Acetoin usw. die den Geruch und Geschmack der vergorenen Produkte beeinflussen. Die Bestimmung der Gärungsnebenprodukte kann beispielweise gaschromatographisch nach der Headspace-Methode (Analyse des Gasraumes) erfolgen. In den erfindungsgemäßen Produkten werden vorzugsweise die höheren Alkohole wie Iso-Amylalkohole bestimmt. Die aromatisch höheren Alkohole sind geschmacklich wirkungsvoll. Ester sind die hauptsächlichen Träger des Buketts eines Getränkes.

Wie in den Beispielen 1 und 2 beschrieben, unterscheidet sich der durch das Doublesse-Verfahren hergestellte Schaumwein vorzugsweise sowohl in Geschmack als aus nachweisbar bezüglich der Konzentration an Aromastoffen von ansonsten unter gleichen Bedingungen nach herkömmlichen Verfahren hergestelltem Schaumwein. Der erfindungsgemäße Schaumwein zeichnet sich beispielsweise vorzugsweise dadurch aus, dass Ethyldecanoat, Isoamylalkohol und/oder Ethyllactat um mindestens 5%, vorzugsweise 10%, insbesondere bevorzugt mehr als 20% im Vergleich zum Grundwein, reduziert sind. Alternativ oder vorzugsweise gleichzeitig ist der Gehalt der Aromastoffe Linalool und/oder Ethyldodecanoat um mindestens 5%, vorzugsweise 10%, insbesondere bevorzugt mehr als 20% im Vergleich zum Grundwein angehoben. Besonders bevorzugt ist der Aromawert von Linalool gegenüber dem Grundwein um mindestens das 5-fache angehoben. Vorteilhafterweise ist auch der Gehalt an 2-Phenyolethanolacetat nachweislich erhöht, vorzugsweise um mindestens 2%, besonders bevorzugt u mindestens 3%.

Dementsprechend betrifft die vorliegende Erfindung auch Schaumweine, die durch das erfindungsgemäße Verfahren erhältlich sind. Die mit Abstand bekanntesten Vertreter derartiger durch alkoholische Gärung hergestellten Schaumweine sind Sekt, Perlwein, Champagner und dergleichen.
Der durch das erfindungsgemäße Verfahren erhaltene Schaumwein zeigt überraschenderweise ein im Vergleich zum Grundwein und auch im Vergleich zu nach herkömmlichen Verfahren erzeugten Schaumwein eine signifikante Reduktion an unangenehm riechenden Aromastoffen, insbesondere Ethyldecanoat, Isoamylalkohol und/oder Ethyl-lactat und zum anderen bzw. alternativ eine Betonung der Sortenaromen, d.h. Zunahme an wohlriechenden Aromastoffen wie Linalool, Ethyldodecanoat und/oder 2-Phenyolethanolacetat. Der erfindungsgemäße Schaumwein zeichnet sich bevorzugt durch folgende Gehalte an Aromastoffen aus:
- 2-Phenyolethanolacetat: > 1800 µg/l;
- Ethyldecanoat: < 9,5 µg/l, besonders bevorzugt < 9 µg/l, insbesondere bevorzugt < 8 µg/l, und vorteilhafterweise < 7 µg/l;
- Isoamylalkohol: < 17 µg/l, besonders bevorzugt < 16,5 µg/l, insbesondere bevorzugt < 16 µg/l, und vorteilhafterweise < 15,5 µg/l;
- Ethyl-lactat: < 500 µg/l, besonders bevorzugt < 475 µg/l, insbesondere bevorzugt < 450 µg/l, und vorteilhafterweise < 425 µg/l;
- Linalool: > 375 µg/l, besonders bevorzugt > 450 µg/l, insbesondere bevorzugt > 500 µg/l, und vorteilhafterweise > 600 µg/l; und/oder
- Ethyldodecanoat: > 175 µg/l, besonders bevorzugt > 200 µg/l, insbesondere bevorzugt > 250 µg/l, und vorteilhafterweise > 275 µg/l.
Die Bestimmung dieser Werte erfolgt vorzugsweise gemäß den in den Beispielen beschriebenen Materialien und Verfahren, oder wenn nicht anders angegeben nach Standardverfahren. Bevorzugt sind Schaumweine, die zwei, besonders bevorzugt drei, insbesondere bevorzugt vier und vorteilhafterweise alle vorstehenden Produktparameter erfüllen. Die vorgenannten Parameter treffen insbesondere für die in Beispiel 2 gewählten Ausgangsweine und Traubenmoste bzw. Traubenmostkonzentrate zu. Je nach gewählten Ausgangsstoffen können die Werte auch höher oder niedriger liegen, wobei diese entweder einzeln oder auch in ihrer Gesamtheit vorzugsweise unter bzw. über den mit herkömmlichen Verfahren erzielbaren Werten liegen. Somit ist erfindungsgemäßer Schaumwein gewöhnlich analytisch wie ggf. sensorisch von mit ansonsten im Wesentlichen gleichen Grundstoffen, aber nach herkömmlichen Verfahren hergestelltem Schaumwein unterscheidbar.

Ferner betrifft die vorliegende Erfindung auch Mischgetränke, die u.a. erfindungsgemäßen Schaumwein enthalten. Seit langem sind Mischgetränke bekannt, die z.B. durch eine Mischung von Sekt mit weinfremden Geschmacksträgern hergestellt werden, wie beispielsweise Fruchtsaft oder Fruchtsaftkonzentrat; siehe beispielsweise Bellini™. Erfindungsgemäße Mischgetränke umfassen daher beispielsweise Cocktailgetränke, in denen erfindungsgemäßer Schaumwein mit Fruchtsaft wie Pfirsichsaft, Orangensaft oder auch mit Bittergetränken wie Aperol etc. gemischt ist.

In einer weiteren Ausführungsform umfasst das erfindungsgemäße Verfahren den Schritt/die Schritte des Abfüllens des Schaumweins oder eines den Schaumwein enthaltenden Mischgetränks in Fässer, Flaschen, und/oder Dosen. Wie bei der herkömmlichen Sektherstellung kann die Feingärung auch in verschließbaren Flaschen stattfinden, so beispielsweise für die Champagnerherstellung. Erfolgt die Gärung ausschließlich in verschlossenen Großbehältern, kann der fertige Schaumwein nach Abschluss der Gärung in Fässer und/oder Flaschen abgefüllt werden.

Die vorliegende Erfindung betrifft schließlich auch eine Zusammenstellung von Mitteln bzw. deren Verwendung im Einzelnen zur Durchführung des erfindungsgemäßen Verfahrens, wobei die Zusammenstellung Traubenbestandteile, Zuckerbestandteile, Mikroorganismen, insbesondere Hefe und/oder andere vergärbare Bestandteile, enthält.

Ferner umfasst der Gegenstand der Ansprüche auch Flüssigkeitstanks, Bottiche und sonstige Behälter, die einen erfindungsgemäßen Schaumwein oder ein Mischgetränk enthalten, sowie Wein- und/oder Sektkellereien enthaltend solche Behälter, in denen ggf. ein erfindungsgemäßes Verfahren durchgeführt wird.

Der Offenbarungsgehalt der vorstehend zitierten Dokumente aus dem Stand der Technik ist hiermit durch Bezugnahme in dieser Anmeldung enthalten. Diese und andere Ausführungsformen sind dem Fachmann offenbart und offensichtlich und umfasst durch die Beschreibung und die Beispiele der vorliegenden Erfindung. Weiterführende Literatur zu den oben angeführten Gärungstechniken, die im Sinne der vorliegenden Erfindung verwendet werden können, können dem Stand der Technik entnommen werden, z.B. aus öffentlichen Bibliotheken unter z.B. der Benutzung elektronischer Hilfsmittel. Zudem bieten sich andere öffentliche Datenbanken an, wie die "Medline", die über das Internet zur Verfügung stehen.

Weitere biotechnologische Techniken zur Ausführung der Erfindung sind dem Fachmann ebenfalls bekannt und können der einschlägigen Literatur entnommen werden; siehe beispielsweise: "Molecular Biology Techniques Manual" 3rd Ed. ed by Coyne, James, Reid and Rybicki (2003) einzusehen auf der Web-Seite: http://www.uct.ac.za/microbiology/manual/MolBiolManual.htm; "Molecular Biology Techniques: An Intensive Laboratory Course" by Ream, Field, and Field (Harcourt Brace & Company: 1998) und die Standardwerke verlegt von Wiley zu den Fachbereichen Biotechnologie, Genetik, Zell- und Molekularbiologie, Wiley-UCH Verlag, Boschstrasse 12, D-69469 Weinheim.

Nachstehend wird die Erfmdung anhand der Zeichnung näher erläutert. Es zeigen:
- **Fig. 1:**: Schematische Darstellung einer bevorzugten Ausführungsform des erfindungsgemäßen Verfahrens.
- **Fig. 2:**: Schematische Darstellung einer Ausführungsform des erfindungsgemäßen Verfahrens unter Kondensatrückführung.
- **Fig. 3:**: Diagramm zur Erläuterung des Gärverlaufs bei einer erfindungsgemäßen zweistufigen Schaumweingärung.
- **Fig. 4:**: Diagramm zur Erläuterung des Gärverlaufs bei einer herkömmlichen einstufigen Schaumweingärung.

Gemäß Fig. 1 wird ein nach Abschluss der Weingärung, Schönung und Filtration erhaltener Wein in einem Druckbehälter vorgelegt. Bei der ersten Schaumwein-Teilgärung wird der Wein mit Traubenmostkonzentrat und Sekthefe versetzt. Nachdem der im Traubenmostkonzentrat (TMK) enthaltene Zucker durch die Hefe zu einem Großteil vergoren worden ist, erfolgt während einer zweiten Teilstufe eine weitere Zugabe von Traubenmostkonzentrat, dessen Zucker durch die in der ersten Stufe noch vorhandene Sekthefe weitgehend vergoren wird. Nach der zweiten Teilgärung kann dann auf übliche Weise die Hefe abgetrennt und gegebenenfalls mit Dosage versetzt werden.

In jeder Teilstufe kann statt reinem Traubenmost oder TMK auch ein Gemisch aus Traubenmost (bzw. TMK) und Zucker verwendet werden. Ferner kann in einer der Teilstufen der Zusatz von Traubenmost (oder TMK) unterbleiben, d. h. es wird nur Zucker zugesetzt.

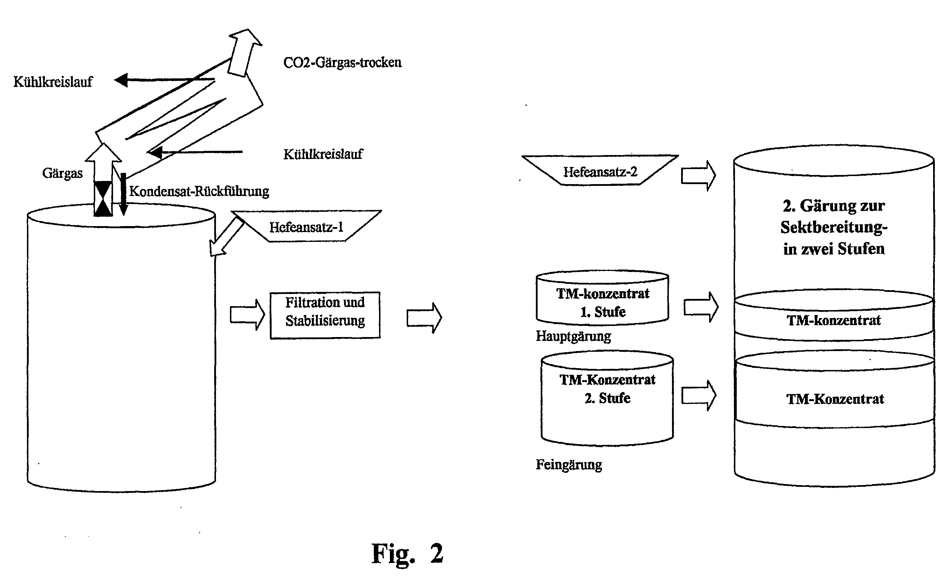

In der in Fig. 2 angedeuteten Ausführungsform wird bei der Weinbereitung unter Kondensatrückführung gearbeitet. In der gewählten Versuchsanordnung bilden Gärtank und Kondensationsvorrichtung eine Einheit. Mit der Versuchsanordnung wird erreicht, dass im Produkt weitgehend alle entstehenden Geruchs- und Geschmacksstoffe erhalten bleiben. Bei der üblichen Weingärung wird in der Regel ein bedeutender Anteil der gärungseigenen Geschmacks- und Geruchsstoffe mit der entweichenden Gärungskohlensäure mitgerissen. Mit der in Fig. 2 dargestellten Ausführungsform wird durch eine am Kopf des Gärungsbehälters angebrachte Kondensationseinrichtung gewährleistet, dass die im Gärprozess entstehenden flüchtigen Gärungsprodukte von den Gaspartikeln abgetrennt werden können. Die flüchtigen Gärungsprodukte werden mit Ausnahme der Kohlensäure dem entstehenden Wein wieder zugeführt. Kondensationsfläche und Kondensationstemperatur werden vom Fachmann so ausgelegt, dass die gewünschte Abtrennung und Rückführung von flüchtigen Gärungskomponenten ermöglicht wird. Besonders gute Erfolge zur Abtrennung der Gärungsprodukte werden durch eine gasdruckregulierte Gärung hervorgerufen. Die Gärungsprodukte verbleiben länger im gärenden Tank und verbinden sich mit dem gewonnenen Alkohol und den vorhandenen Inhaltsstoffen.

Im Anschluss an die Weingärung wird, wie bei der in Fig. 1 dargestellten Ausführungsform, Traubenmostkonzentrat zugefügt und die erste Teilstufe der Schaumweingärung durchgeführt. Eine zweite Teilstufe der Schaumweingärung erfolgt gemäß Fig. 2 nach Zusatz von frischem Traubenmost, gegebenenfalls anderer Rebsorten.

Prinzipiell entspricht die in Fig. 2 dargestellte Ausführungsform der Ausführungsform von Fig. 1, wobei lediglich im erstgenannten Fall zusätzlich bei der Weinbereitung eine Kondensatrückführung erfolgt.

Nachstehend wird ein erfindungsgemäßes Beispiel zur Herstellung von Sekt im Vergleich mit einer herkömmlichen Sektherstellung beschrieben.

### Beispiele

### Beispiel 1: Vergleich der durch das Doublesse- und herkömmlichen Verfahren erhaltenen Schaumweine anhand Weines des Jahrgangs 2001, Rebsorte Weißburgunder, und Gewürztraminer-Traubenmostkonzentrat

Verwendet wurde Traubenmost des Jahrgangs 2001, Rebsorte Weißburgunder, in der Qualitätsstufe Qualitätswein bA. Der Most wurde zur ersten Klärung flotiert und anschließend mit einer handelsüblichen Kaltgärhefe bei 19 °C kaltvergoren. Nach Abschluss der Gärung wurde der Wein zur Eiweißstabilisierung geschönt und filtriert. Dieser Wein kam bei den nachstehenden beiden Gärversuchen zur Anwendung.
In einem erfindungsgemäßen Ansatz wurde der Wein in zwei Teilstufen mit Traubenmostkonzentrat versetzt und unter Einsatz einer Sekthefe zu Sekt vergoren. Zum Vergleich wurden in einem Parallelversuch die gleichen Produkte, nämlich Wein, Hefe und Traubenmost, nach einem kellertechnisch üblichen Gärverfahren (einmaliger Zusatz der Dosage) versektet.
Die Versuchsdurchführung erfolgte jeweils in einem 18 Liter fassenden Premix-Behälter (Kleindruckbehälter). Die Gärtemperatur betrug 18 bis 20 °C. Die gesamte Gärdauer betrug 21 Tage. Nach entsprechender Lagerung wurde die Hefe vom Sekt getrennt. Unter Zusatz von 60 ml/l schwefliger Säure zur Haltbarmachung erfolgte die Füllung des Produkts auf Sektflaschen.

Nachstehend werden das erfindungsgemäße Verfahren und das parallel durchgeführte Vergleichsverfahren tabellarisch dargestellt.

**Tabelle I:**

| Wein aus 2001 Weißburgunder, -Gäransatz ca. 171 | | |
|---|---|---|
| **GV 006A erfindungsgemäße Stufengärung** | **Erste Teilgärung** | **Zweite Teilgärung** |
| Ansatz 06.12.2001 | 1. Teilansatz am 06.12.01: 12,5 g/l Restzucker in Form von Gewürztraminer-Traubenmostkonzentrat (0,25 Liter), Zugabe von Sekthefe (Suspension), 50 ml/l | 2. Teilansatz am 20.12.01: weitere 12,5 g/l Restzucker in Form von Gewürztraminer-Traubenmostkonzentrat (0,25 Liter), Hefetrennung durch Filtration, Flaschenfüllung 21.01.02 |

| **GV 006 herkömmliche Vollgärung** | | |
|---|---|---|
| Ansatz 06.12.2001: | | |
| 25 g/l Restzucker in Form von Gewürztraminer-Traubenmostkonzentrat, Zugabe von Sekthefe (Suspension), 50 ml/l, Hefetrennung durch Filtration mit anschließender Flaschenfüllung am 21.01.02, | | |
| In der nachstehenden Tabelle II ist der Gärverlauf sowohl für den erfindungsgemäßen Ansatz als auch für den Vergleichsansatz zahlenmäßig dargelegt. | | |

**Tabelle II:**

| A. Erfindungsgemäßes Verfahren | | | | | | | |
|---|---|---|---|---|---|---|---|
| **GV006A Werte** | **Analyse** | | | | | | |
| **Datum** | 06.12.01 | 12.12.01 | 19.12.01 | 20.12.01 | 04.01.01 | 10.01.02 | 19.01.02 |
| | 1. Teilgärung | | | 2. Teilgärung | | | |
| **Gesamtalkohol g/l** | 95,4 | 98,5 | 99,3 | 99,7 | 104,5 | 106,1 | 106,8 |
| **Gesamtalkohol Vol.-%** | 12,09 | 12,48 | 12,58 | 12,63 | 13,24 | 13,44 | 13,53 |
| **Dichte** | 0,9960 | 0,9960 | 0,9960 | 0,9960 | 0,9920 | 0,9918 | 0,9917 |
| **Zucker g/l** | 13,4 | 8,9 | 5,8 | 17,3 | 7,8 | 5,1 | 2,1 |
| **Gesamtsäure g/l** | 6,7 | 7,2 | 7,2 | 7,2 | 7,2 | 6,8 | 6,8 |
| **Glucose g/l** | 4,5 | 1,2 | 0,3 | 4,2 | 0,4 | 0,5 | 0,5 |
| **Fructose g/l** | 6,5 | 1,6 | 0,7 | 6,5 | 0,9 | 0,3 | 0,1 |
| **pH-Wert** | 3,15 | 3,15 | 3,15 | 3,15 | 3,14 | 3,14 | 3,13 |
| **Weinsäure g/l** | 2,9 | 2,9 | 2,9 | 2,9 | 3,1 | 2,9 | 3,0 |
| **Äpfelsäure g/l** | 3,2 | 3,2 | 3,2 | 3,2 | 3,1 | 3,2 | 3,1 |
| **Zitronensäure g/l** | 0,28 | 0,28 | 0,28 | 0,28 | 0,29 | 0,29 | 0,29 |
| **flüchtige Säure g/l** | 0,32 | 0,32 | 0,32 | 0,32 | 0,33 | 0,32 | 0,34 |

**Tabelle II:**

| B. Herkömmliches Verfahren | | | | | | | |
|---|---|---|---|---|---|---|---|
| **GV006 Werte** | **Analyse** | | | | | | |
| **Datum** | 06.12.01 | 12.12.01 | 17.12.01 | 20.12.01 | 03.01.01 | 15.01.02 | 19.01.02 |
| **Gesamtalkohol g/l** | 95,4 | 101,7 | 103,1 | 104,3 | 105,3 | 107,1 | 107,0 |
| **Gesamtalkohol Vol.-%** | 12,09 | 12,88 | 13,06 | 13,21 | 13,34 | 13,57 | 13,55 |
| **Dichte** | 0,9960 | 0,9957 | 0,9957 | 0,9957 | 0,9926 | 0,9919 | 0,9916 |
| **Zucker g/l** | 25,4 | 11,5 | 8,7 | 6,2 | 5,4 | 2,1 | 2,1 |
| **Gesamtsäure g/l** | 6,7 | 7,2 | 7,0 | 7,0 | 6,8 | 6,75 | 6,75 |
| **Glucose g/l** | 4,5 | 3,8 | 1,6 | 1,2 | 0,8 | 0,6 | 0,4 |
| **Fructose g/l** | 6,5 | 4,3 | 1,8 | 1,3 | 0,7 | 0,5 | 0 |
| **pH-Wert** | 3,15 | 3,15 | 3,14 | 3,15 | 3,14 | 3,13 | 3,13 |
| **Weinsäure g/l** | 2,9 | 2,8 | 2,8 | 2,8 | 3,1 | 2,9 | 2,9 |
| **Äpfelsäure g/l** | 3,2 | 3 | 3 | 3 | 3,3 | 3,1 | 3,1 |
| **Zitronensäure g/l** | 0,28 | 0,41 | 0,35 | 0,41 | 0,32 | 0,33 | 0,25 |
| **flüchtige Säure g/l** | 0,32 | 0,33 | 0,32 | 0,32 | 0,33 | 0,3 | 0,33 |

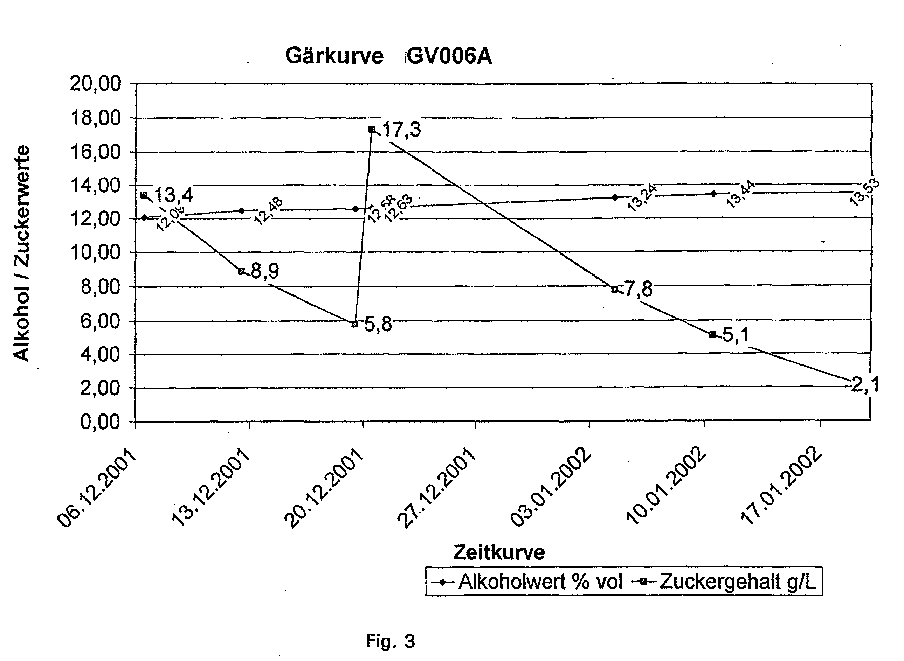

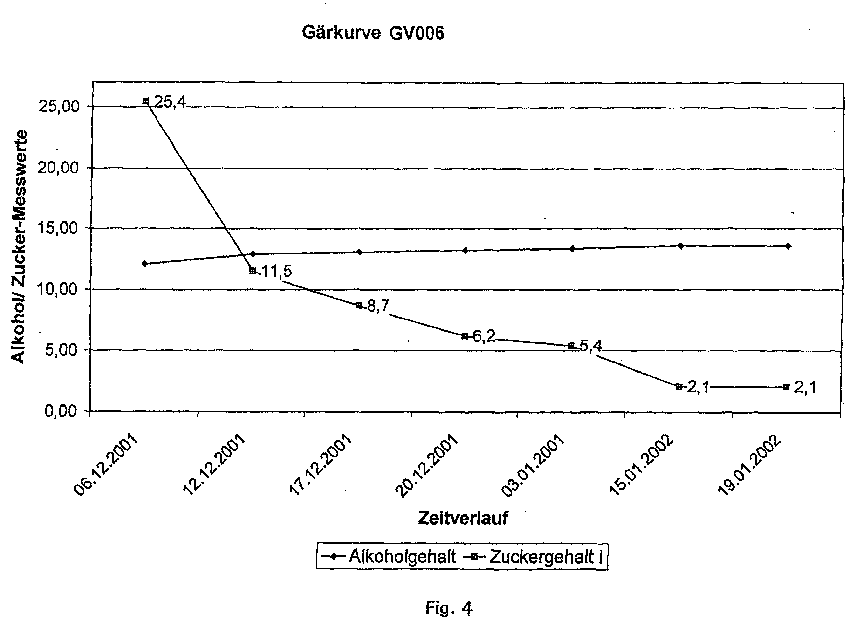

Zur besseren Übersichtlichkeit ist der Gärverlauf dieser beiden Ansätze in Fig. 3 und 4 in Form eines Diagramms dargestellt.

Die beiden erhaltenen Sekte wurden bei der Staatlichen Lehr- und Forschungsanstalt für Landwirtschaft, Weinbau und Gartenbau in Neustadt an der Weinstraße einer sensorischen Verkostung unterzogen. Dabei konnten in einem Triangeltest (DIN 10951, ISO 4120, § 35 LMBG, Methode 00.907) 8 von 12 Prüfern die nach dem erfindungsgemäßen Verfahren hergestellte Probe einwandfrei anhand ihres Geschmacks identifizieren. Dies stellt einen hoch signifikanten Unterschied mit einer Fehlerwahrscheinlichkeit von 1 % dar. Der erfindungsgemäß hergestellte Sekt fiel insbesondere durch eine deutlich höhere Fruchtigkeit auf und erinnerte an Weißweine mit hoher Fructoserestsüße oder an Moscato Sekte aus Piemont.

Die Tatsache, dass bei beiden Ansätzen identische Ausgangsweine und gleiche Gesamtmengen des identischen Traubenmostkonzentrats bei auch ansonsten gleichen Gärungsbedingungen eingesetzt wurden und dennoch bei der in Teilstufen durchgeführten erfindungsgemäßen Gärung ein Sekt erhalten werden konnte, der sich geschmacklich eindeutig vom herkömmlich hergestellten Sekt unterscheidet, muss als überraschend bezeichnet werden.

Es ist ersichtlich, dass eine in zwei Stufen (oder gegebenenfalls auch in mehreren Stufen) durchgeführte Schaumweingärung vielfältige Möglichkeiten zur Geschmacksbeeinflussung von Sekt bietet.

### Beispiel 2: Vergleich der durch das Doublesse- und herkömmlichen Verfahren erhaltenen Schaumweine anhand Wein des Jahrgangs 2002, Rebsorte Rivaner, und Morio-Muskat/Silvaner-Traubenmostkonzentrat

Die Versuchdurchführung entsprach im Wesentlichen der in Beispiel 1 beschriebenen Verfahren. Ausgangspunkt war ein 2002er Grundwein der Rebsorte Rivaner, der mit einem Mostkonzentrat (Morio-Muskat/Silvaner) oder alternativ mit Saccharose um 24 g/L im Restzucker angehoben wurde.

Die Aromenuntersuchung mittels Headspace-SPME-GC-FID wurde in dreifacher Wiederholung für den Grundwein, den Sekt nach dem Doublesse Verfahren und den Sekt mittels herkömmlicher Verfahrensweise durchgeführt.

Hierzu wurden 5 ml der Sektprobe mit 1,5 g/L NaCl versetzt und 5 µL einer Heptan-2-ol Lösung als interner Standard zugesetzt, die 9,8 mg/ml Heptan-2-ol gelöst in reinem Ethanol enthielt. Die Extraktion aus der Headspace erfolgte mit einer 50/30 µm DVB/Carboxen/PDMS Stable-Flex-SPME-Faser (Supelco Inc.). Diese verblieb für 90 min in der Headspace über der Sektprobe, die im Wasserbad auf 30 °C erwärmt wurde und mit einem magnetischen Rührer ständig gemischt wurde. Die Aromenanalyse erfolgte auf einem HP-6890 GC mit FID mittels einer 50 m CP-Wax Säule (0,25 mm / 0,2 µm). Das Temperaturprogramm begann bei 40 °C mit einer Haltezeit von 2 min, stieg dann mit 4 °C/min auf die Endtemperatur von 210 °C, wo es für die 10 min verblieb. Die Desorption der SPME-Faser erfolgte in dem 200 °C heißen Injektor, der 2 min splitlos gefahren wurde.

Die Identifizierung der Aromastoffe erfolgte über Kovacs-Incices und Vorschläge aus der Massenspektrometer Bibliothek NIST. Es wurde der Mittelwert der 3 Wiederholungen verwendet und mit dem internen Standard quantifiziert.

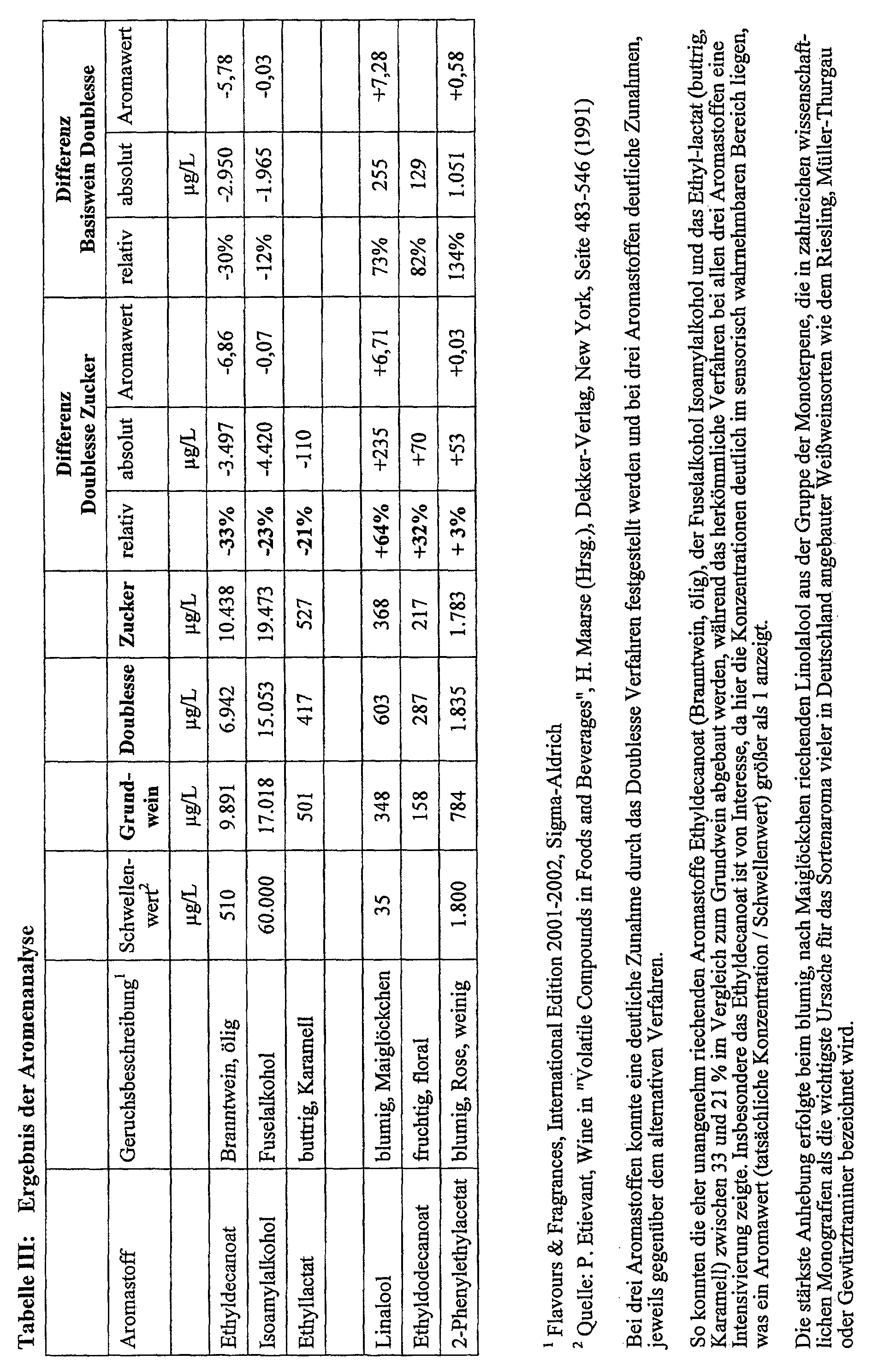

Aufgrund des niedrigen Schwellenwertes und der starken Anhebung durch das Doublesse Verfahren konnte der Aromawert von Linalool gegenüber dem Grundwein um das 7,28-fache angehoben werden und gegenüber dem alternativen herkömmlichen Verfahren um das 6,71fache.

Auch das fruchtig florale Ethyldodecanoat wurde deutlich um 32 % gegenüber dem herkömmlichen Verfahren angehoben.

Gegenüber dem Grundwein wurde auch das blumige, weinige und nach Rosen duftende 2-Phenylethylacetat um das 0,58-fache im Aromawert angehoben. Auch wenn der Unterschied zum herkömmlichen Verfahren nur 3 % betrug, so können diese 3 % gerade die Menge darstellen, die notwendig ist, um den Schwellenwert zu überschreiten und damit den Aromastoff in der menschlichen Nase wahrnehmbar zu machen. In der Tat liegt der Gehalt an 2-Phenyolethanolacetat nach dem Doublesse Verfahren mit 1835 µg/L gerade über dem in der Literatur angegebenen Schwellenwert von 1800 µg/L, während das herkömmliche Verfahren mit 1785 µg/L knapp darunter liegt.

Zusammenfassend bestätigt die Aromenanalyse die sensorischen Befunde, da im sensorisch wahrnehmbaren Bereich sowohl Aromastoffe angehoben werden, die die Sektqualität steigern, als auch solche Aromastoffe abgesenkt werden, die die Qualität mindern. Insgesamt erhalten die Sekte durch das Doublesse Verfahren mehr Sortencharakter, wirken duftiger und fruchtiger.

## Patentansprüche

1. Verfahren zur Herstellung von Schaumwein, bei dem Wein unter Verwendung von Hefe und einer zuckerhaltigen Komponente zu Schaumwein vergoren wird, wobei
(a) nach Zugabe der Hefe mit einer Teilmenge der zuckerhaltigen Komponente
(b) zumindest ein Teil der zu vergärenden zuckerhaltigen Komponente zu einem späteren Zeitpunkt während der Gärung zugeführt wird.

2. Verfahren nach Anspruch 1, wobei die zuckerhaltige Komponente Traubenbestandteile und/oder andere zuckerhaltigen Bestandteile umfasst.

3. Verfahren nach Anspruch 1 oder 2, wobei die zuckerhaltige Komponente Traubenmost oder Traubenmostkonzentrat umfasst.

4. Verfahren nach einem der Ansprüche 1 bis 3, wobei das Verhältnis der in (a) und (b) eingesetzten zuckerhaltigen Komponente von 40-60% bis 60-40% bezogen auf die Gesamtmenge an eingesetzten Zucker beträgt.

5. Verfahren nach Anspruch 4, wobei der Zucker Glukose bzw. Fruktose ist.

6. Verfahren nach einem der Ansprüche 1 bis 5, wobei als zuckerhaltige Komponente in (a) und/oder (b) Traubenmost verwendet wird.

7. Verfahren nach einem der Ansprüche 1 bis 6, wobei als zuckerhaltige Komponente in (a) und/oder (b) Traubenmostkonzentrat verwendet wird.

8. Verfahren nach einem der Ansprüche 1 bis 7, wobei als zuckerhaltige Komponente in (a) und/oder (b) Rohr- oder Rübenzucker verwendet wird.

9. Verfahren nach einem der Ansprüche 1 bis 8, ferner umfassend die Stufe, dass Traubenmost in Gegenwart von Hefe zu Wein vergoren wird.

10. Verfahren nach einem der Ansprüche 1 bis 9, wobei ein Most oder Mostkonzentrat einer vom Wein abweichenden Traubensorte verwendet wird.

11. Verfahren nach einem der Ansprüche 1 bis 10, wobei in (a) und (b) Moste oder Mostkonzentrate verschiedener Traubensorten verwendet werden.

12. Verfahren nach einem der Ansprüche 9 bis 11, wobei die Stufe der Weingärung unter Kondensatrückführung durchgeführt wird.

13. Verfahren nach einem der Ansprüche 1 bis 12, wobei Ethyldecanoat, Isoamylalkohol und/oder Ethyl-lactat um mindestens 5%, vorzugsweise 10%, insbesondere bevorzugt mehr als 20% im Vergleich zum Grundwein abgebaut werden.

14. Verfahren nach einem der Ansprüche 1 bis 13, wobei der Gehalt der Aromastoffe Linalool und/oder Ethyldodecanoat um mindestens 5%, vorzugsweise 10%, insbesondere bevorzugt mehr als 20% im Vergleich zum Grundwein angehoben wird.

15. Schaumwein erhältlich nach einem Verfahren einer oder mehrerer der Ansprüche 1 bis 14.

16. Schaumwein nach Anspruch 15, wobei der Gehalt an 2-Phenyolethanolacetat > 1800 µg/l ist.

17. Schaumwein nach Anspruch 15 oder 16, wobei der Gehalt an Ethyldecanoat < 9,5 µg/l, an Isoamylalkohol < 16.5 µg/l und/oder an Ethyl-lactat < 475 µg/l ist.

18. Schaumwein nach einem der Ansprüche 15 bis 17, wobei der Gehalt an Linalool > 400 µg/l und/oder an Ethyldodecanoat > 175 µg/l ist

19. Mischgetränk enthaltend einen Schaumwein nach einem der Ansprüche 15 bis 18.

20. Verfahren nach einem der Ansprüche 1 bis 14, umfassend den Schritt/die Schritte des Abfüllens des Schaumweins oder eines den Schaumwein enthaltenden Mischgetränks in Fässer, Flaschen, und/oder Dosen.

21. Flüssigkeitstank, Bottich, Flasche oder sonstige Behälter enthaltend einen Schaumwein nach einem der Ansprüche 15 bis 18 oder ein Mischgetränk nach Anspruch 19.

22. Wein- und/oder Sekt-Kellerei enthaltend einen Behälter nach Anspruch 21.

23. Verwendung von Wein, Traubenbestandteilen und/oder Hefe zur Durchführung eines Verfahrens nach einem der Ansprüche 1 bis 14.

## Claims

1. Method for producing sparkling wine, wherein wine is fermented by use of yeast and a sugar-containing component, wherein
(a) after the addition of the yeast with a partial amount of the sugar-containing component
(b) at least a portion of the sugar-containing component to be fermented is added at a later point in time during fermentation.

2. The method of claim 1, wherein the sugar-containing component comprises constituents of grapes and/or other sugar-containing constituents.

3. The method of claim 1 or 2, wherein the sugar-containing component comprises grape-must or grape-must concentrate.

4. The method of any one of claims 1 to 3, wherein the ratio of the sugar-containing components used in (a) and (b) amounts to 40-60% to 60-40% relative to the total amount of utilized sugar.

5. The method of claim 4, wherein the sugar is glucose or fructose, respectively.

6. The method of any one of claims 1 to 5, wherein grape-must is used as sugar-containing component in (a) and/or (b).

7. The method of any one of claims 1 to 6, wherein grape-must concentrate is used as sugar-containing component in (a) and/or (b).

8. The method of any one of claims 1 to 7, wherein sucrose or beat sugar is used as sugar-containing component in (a) and/or (b).

9. The method of any one of claims 1 to 8, further comprising the step, wherein grape-must is fermented to wine in the presence of yeast.

10. The method of any one of claims 1 to 9, wherein a must or must-concentrate of a grape variety is used which differs from the wine.

11. The method of any one of claims 1 to 10, wherein in (a) and (b) must or must-concentrate of different grape varieties are used.

12. The method of any one of claims 9 to 11, wherein the step of wine fermentation is performed under condensate recirculation.

13. The method of any one of claims 1 to 12, wherein ethyl decanoate, isoamyl alcohol and/or ethyl lactate is degraded by at least 5%, preferably 10%, particular preferred more than 20% compared to the base wine.

14. The method of any one of claims 1 to 13, wherein the content of the aroma ingredient linalool and/or ethyl dodecanoate is raised by at least 5%, preferably 10%, particularly preferred more than 20% compared to the base wine.

15. Sparkling wine obtainable by a method of one or more of claims 1 to 14.

16. Sparkling wine of claim 15, wherein the content of 2-phenylethanol acetate is > 1800 µg/l.

17. Sparkling wine of claim 15 or 16, wherein the content of ethyl decanoate is < 9.5 µg/l and isoamyl alcohol < 16.5 µg/l and/or an ethyl lactate < 475 µg/l.

18. Sparkling wine of any one of claims 15 to 17, wherein the content of linalool is > 400 µg/l and/or an ethyl dodecanoate > 175 µg/l.

19. Mixed beverage containing a sparkling wine of any one of claims 15 to 18.

20. Method of any one of claims 1 to 14, comprising the step/the steps of bottling the sparkling wine or a mixed beverage containing the sparkling wine into barrels, bottles, and/or cans.

21. Liquid tank, vat, bottle or other container containing a sparkling wine of any one of claims 15 to 18 or a mixed beverage of claim 19.

22. Wine and/or sparkling wine cellar containing a container of claim 21.

23. Use of wine, grape-constituents and/or yeast for performing a method of any one of claims 1 to 14.

## Revendications

1. Procédé de préparation de vin mousseux, dans lequel on fait fermenter du vin en employant de la levure et un composant contenant du sucre, dans lequel
(a) après ajout de la levure avec une quantité partielle du composant contenant du sucre,
(b) au moins une partie du composant contenant du sucre, à faire fermenter, est introduite à un instant ultérieur pendant la fermentation.

2. Procédé selon la revendication 1, dans lequel le composant contenant du sucre comprend des constituants de raisin et/ou d'autres constituants contenant du sucre.

3. Procédé selon la revendication 1 ou 2, dans lequel le composant contenant du sucre comprend du moût de raisin ou un concentré de moût de raisin.

4. Procédé selon l'une quelconque des revendications 1 à 3, dans lequel le rapport du composant contenant du sucre mis en oeuvre dans (a) et (b) est de 40-60% jusqu'à 60-40% par rapport à la quantité totale de sucre mis en oeuvre.

5. Procédé selon la revendication 4, dans lequel le sucre est le glucose ou le fructose, respectivement.

6. Procédé selon l'une quelconque des revendications 1 à 5, dans lequel le moût de raisin est employé comme composant contenant du sucre dans (a) et/ou (b).

7. Procédé selon l'une quelconque des revendications 1 à 6, dans lequel le concentré de moût de raisin est employé comme composant contenant du sucre dans (a) et/ou (b).

8. Procédé selon l'une quelconque des revendications 1 à 7, dans lequel le saccharose ou le sucre de betterave est employé comme composant contenant du sucre dans (a) et/ou (b).

9. Procédé selon l'une quelconque des revendications 1 à 8, comprenant en outre l'étape, dans laquelle on fait fermenter du moût de raisin pour obtenir du vin, en présence de levure.

10. Procédé selon l'une quelconque des revendications 1 à 9, dans lequel est employé un moût ou un concentré de moût d'une espèce de raisin qui diffère de celle du vin.

11. Procédé selon l'une quelconque des revendications 1 à 10, dans lequel des moûts ou des concentrés de moûts de différentes espèces de raisins, sont employés dans (a) et (b).

12. Procédé selon l'une quelconque des revendications 9 à 11, dans lequel l'étape de fermentation en vin est réalisée avec recyclage du condensat.

13. Procédé selon l'une quelconque des revendications 1 à 12, dans lequel le décanoate d'éthyle, l'alcool isoamylique et/ou le lactate d'éthyle sont dégradés à raison d'au moins 5%, de préférence 10%, de manière particulièrement préférée de plus de 20%, par rapport au vin de base.

14. Procédé selon l'une quelconque des revendications 1 à 13, dans lequel la teneur des substances aromatiques en linalol et/ou en dodécanoate d'éthyle est augmentée à raison d'au moins 5%, de préférence 10%, de manière particulièrement préférée plus de 20%, par rapport au vin de base.

15. Vin mousseux pouvant être obtenu d'après un procédé selon l'une ou plusieurs des revendications 1 à 14.

16. Vin mousseux selon la revendication 15, dans lequel la teneur en acétate de 2-phényoléthanol est > 1800 µg/l.

17. Vin mousseux selon la revendication 15 ou 16, dans lequel la teneur en décanoate d'éthyle est < 9,5 µg/l, la teneur en alcool isoamylique est < 16,5 µg/l et/ou la teneur en lactate d'éthyle < 475 µg/l.

18. Vin mousseux selon l'une quelconque des revendications 15 à 17, dans lequel la teneur en linalol est > 400 µg/l et/ou la teneur en dodécanoate d'éthyle est > 175 µg/l.

19. Boisson mixte contenant un vin mousseux selon l'une quelconque des revendications 15 à 18.

20. Procédé selon l'une quelconque des revendications 1 à 14, comprenant l'étape/les étapes du remplissage de fûts, bouteilles et/ou boîtes avec le vin mousseux ou avec une boisson mixte contenant le vin mousseux.

21. Réservoir de liquide, cuve, bouteille ou autres récipients contenant un vin moussant selon l'une quelconque des revendications 15 à 18 ou une boisson mixte selon la revendication 19.

22. Caves à vin et/ou à vin mousseux, contenant un récipient selon la revendication 21.

23. Utilisation de vin, de constituants de raisin, et/ou de levure, pour réaliser un procédé selon l'une quelconque des revendications 1 à 14.
